# EUROPEAN PATENT APPLICATION

(11) **EP 1 108 595 A2**
(43) Date of publication of application: **20.06.2001**
(21) Application number: 00204507.8
(22) Date of filing: 14.12.2000
(51) Int. Cl.: B60K 15/03

(54) **Fuel containment fuel tank**

(30) Priority: 18.12.1999 US 172565 P; 16.10.2000 US 688479
(71) Applicant: Delphi Technologies, Inc., Troy, MI 48007 (US)
(72) Inventor: Abu-Isa, Ismat A., Rochester Hills, MI 48309 (US); Short, William T., Southfield, MI 48076 (US)
(74) Representative: Denton, Michael John

(57) **Abstract**

A fuel containment fuel tank (10) for a vehicle includes a tank shell (12) having a wall (18,20,22,24,26,28) formed from a plurality of layers (30,32,34,36,38,40). The layers (30,32,34,36,38,40) include at least an inner layer (30), an outer layer (40), a fuel permeation barrier layer (34) disposed between the inner layer (30) and the outer layer (40), and a fuel containment layer (42) disposed adjacent the inner layer (30) to break-away from the inner layer (30) and contain fuel during an impact.

## Description

### TECHNICAL FIELD

The present invention relates generally to fuel tanks for vehicles and, more particularly, to a fuel containment fuel tank for a vehicle.

### BACKGROUND OF THE INVENTION

It is known to provide a fuel tank such as a plastic fuel tank in a vehicle to hold fuel to be used by an engine of the vehicle. In some vehicles, the plastic fuel tank has an overall thinner wall thickness, than conventional blow-molded tanks, without sacrificing mechanical strength or permeability performance. However, there is concern that the thinner wall thickness may not provide sufficient impact resistance to the fuel tank.

One commercial approach to resolve this concern is to thicken the tank, which increases the weight, cost and reduces fuel capacity of the fuel tank. Another commercial approach is to protect the fuel tank by metal sheets or shields, which increases the weight and cost of the plastic fuel tank. Yet another commercial approach is to include a tough breakaway inner lining that is capable of retaining fuel even when the exterior of the tank has been compromised in an impact. Such a liner should adhere to the inside of the primary tank walls under normal conditions, but separate if the tank is exposed to forces or impacts that could break the more rigid outer walls. In a thermoformed tank, the situation can be complicated by the need to heat weld internal structures to the inside of the fuel tank. In this case, the liner must be able not only of controlled release from the outer tank walls, but must also have an inner surface capable of heat welding to the internal components. Finally, the fuel tank must also be capable of inhibiting permeation of a wide range of fuel types. Therefore, it is desirable to provide a fuel tank for a vehicle that has a containment liner to increase impact and rupture resistance without substantially increasing thickness of the tank wall.

### SUMMARY OF THE INVENTION

It is, therefore, one object of the present invention to provide a new fuel containment fuel tank for a vehicle.

It is another object of the present invention to provide a multi-layered plastic fuel tank with a breakaway inner fuel containment liner.

To achieve the foregoing objects, the present invention is a fuel containment fuel tank for a vehicle including a tank shell having a wall formed from a plurality of layers. The layers include at least an inner layer, an outer layer, a fuel permeation barrier layer disposed between the inner layer and the outer layer, and a fuel containment layer disposed adjacent the inner layer to break-away from the inner layer and contain fuel during an impact.

One advantage of the present invention is that a fuel containment fuel tank is provided for a vehicle that has improved integrity during a vehicle impact, improved resistance to a wider variety of fuel formulations, and improved manufacturing efficiencies due to the ability to heat weld internal structures during thermoforming. Another advantage of the present invention is that the fuel containment fuel tank that has a breakaway inner fuel containment liner. Yet another advantage of the present invention is that the fuel containment fuel tank has improved integrity, improved ability to meet fuel permeation standards with mixed alcohol-hydrocarbon fuels, and more economical tank fabrication, not possible with conventional plastic fuel tanks that require internal supports. Still another advantage of the present invention is that the fuel containment fuel tank is made from a process that is more flexible and economically favorable than metal tanks.

Other objects, features, and advantages of the present invention will be readily appreciated, as the same becomes better understood, after reading the subsequent description taken in conjunction with the accompanying drawings.

### BRIEF DESCRIPTION OF THE DRAWINGS

Figure 1 is a perspective view of a fuel containment fuel tank, according to the present invention.

Figure 2 is an enlarged fragmentary view of the fuel containment fuel tank of Figure 1.

Figure 3 is a view similar to Figure 2 of the fuel containment fuel tank illustrated after a vehicle impact.

Figure 4 is a fragmentary elevational view of a portion of the fuel containment fuel tank of Figure 1.

Figure 5 is a fragmentary elevational view of another embodiment, according to the present invention, of a portion of the fuel containment fuel tank of Figure 1.

Figure 6 is a fragmentary elevational view of yet another embodiment, according to the present invention, of a portion of the fuel containment fuel tank of Figure 1.

### DESCRIPTION OF THE PREFERRED EMBODIMENT

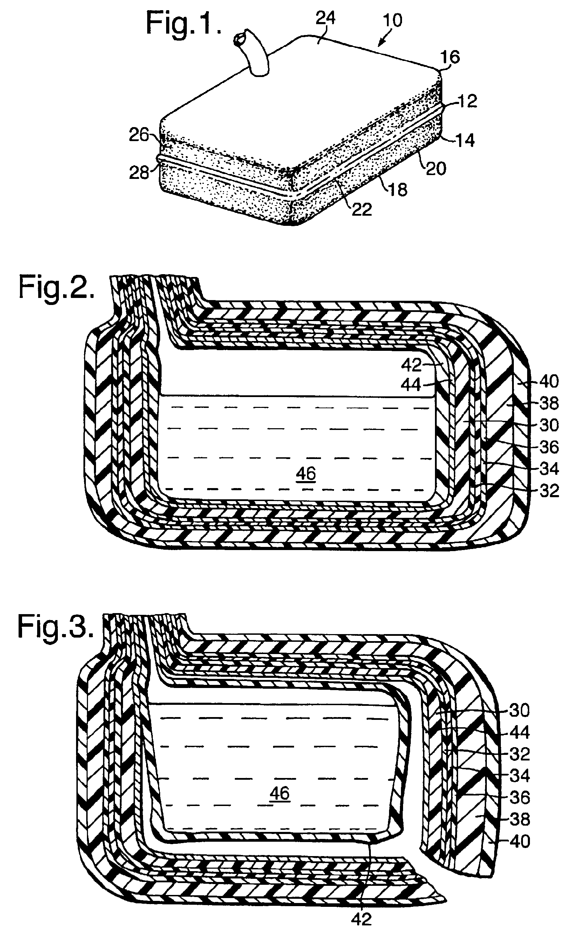

Referring to the drawings and in particular Figures 1 and 2, one embodiment of a fuel containment fuel tank 10, according to the present invention, is shown for a vehicle (not shown). The fuel containment fuel tank 10 includes a tank shell 12. In this embodiment illustrated, the tank shell 12 is of a generally rectangular type. The tank shell 12 includes a first or lower half shell 14 and a second or upper half shell 16. The lower half shell 14 has a base wall 18 and a side wall 20 around a periphery of the base wall 18 and extending generally perpendicular thereto. The side wall 20 has a flange 22 extending outwardly and generally perpendicular thereto. The upper half shell 16 has a base wall 24 and a side wall 26 around a periphery of the base wall 24 and extending generally perpendicular thereto. The side wall 26 has a flange 28 extending outwardly and generally perpendicular thereto. The flanges 22 and 28 of the lower half shell 14 and upper half shell 16, respectively, are joined together by suitable means such as by thermoforming, compression molding, or friction welding. The lower half shell 14 and upper half shell 16 are made of a rigid material such as a thermoformable plastic.

Referring to Figures 1 and 2, the fuel containment fuel tank 10 has the base walls 18,24, side walls 20,26, and flanges 22,28, which are formed from a plurality of layers 30,32,34,36,38,40. The first or inner layer or wall 30 is made from a high-density polyethylene (HDPE) or similar polyolefin, which is conventional material known in the art. The first layer 30 has a predetermined thickness of approximately two millimeters (2.00 mm). The second layer 32 is a tie-layer made from a low-density modified polyethylene or an adhesion promoter, which is a conventional material known in the art. The second layer 32 has a predetermined thickness of approximately 0.1 mm. to 1.0 mm. The third layer 34 is made from a hydrocarbon barrier material such as ethylene vinyl alcohol (EVOH) copolymer, which is a conventional material known in the art. The third layer 34 has a predetermined thickness of approximately 0.11 mm. The fourth layer 36 is a tie-layer made from a low-density modified polyethylene or an adhesion promoter, which is a conventional material known in the art. The fourth layer 36 has a predetermined thickness of approximately 0.1 mm. to 1.0 mm. The fifth layer 38 is made from up to one hundred percent (100%) regrind of a high density polyethylene (HDPE), which is a conventional material known in the art. The fifth layer 38 has a predetermined thickness of approximately 1.5 mm. The sixth or outer layer 40 is made from a high-density polyethylene (HDPE) or similar polyolefin, which is a conventional material known in the art. The sixth layer 40 has a predetermined thickness of approximately one millimeter (1.00 mm).

The fuel containment fuel tank 10 also includes a fuel containment liner or layer 42 disposed adjacent the first layer 30 of the base walls 18,24, side walls 20,26, and flanges 22,28. The fuel containment layer 42 is made from an elastic material such as polyurethane or a tetrafluoroethylene-hexafluoropropylene vinylidene fluoride terpolymer, which are highly resistant to rupture or puncture. The fuel containment layer 42 has a predetermined thickness of approximately 2.5 mm.

The fuel containment fuel tank 10 further includes an attachment layer 44 to attach the fuel containment layer 42 to an inner surface of the first layer 30. The attachment layer 44 is made from an adhesive such as a shear sensitive adhesive material, which is commercially available and known in the art. The attachment layer 44 has a predetermined thickness of approximately 0.07 mm. It should be appreciated that the surface of the fuel containment layer 42 may be treated with corona, heat, or chemical adhesion promoters so that one surface will separate in a high-speed impact.

In manufacturing the fuel containment fuel tank 10, several processes may be used. Preferably, the fuel containment fuel tank 10 is formed by a conventional thermoforming process wherein the fuel containment layer 42 can be thermoformed along with the other six layer co-extruded sheet by heat and pressure. The fuel containment layer 42 can be incorporated during the thermoforming process to the first layer 30 of the fuel tank 10 or to both half shells 14 and 16.

In operation, the fuel containment fuel tank 10 contains fuel 46 as illustrated in Figure 2. During a vehicle impact, the fuel containment layer 42 breaks away or separates from the first layer 30 of the fuel tank 10 to form a containment bladder to contain the fuel 46 having sufficient impact and puncture resistance by a sharp object even when the other layers 30,32,34,36,38,40 have been compromised or ruptured as illustrated in Figure 3.

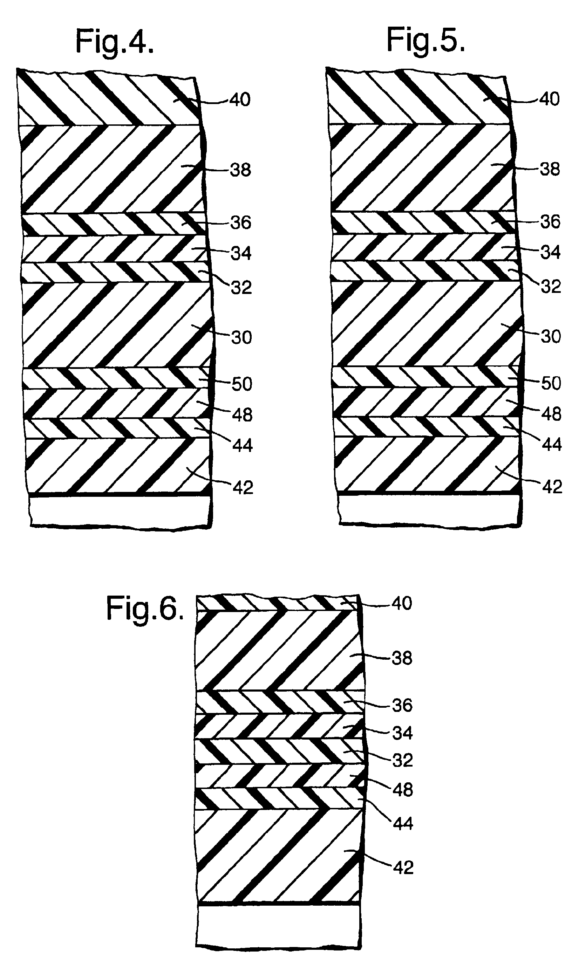

Referring to Figure 4, another embodiment, according to the present invention, of the fuel containment fuel tank 10 is shown. In this embodiment, the fuel containment fuel tank 10 includes a second barrier layer 48 with barrier properties to improve permeation resistance to alcohol or mixed alcohol-hydrocarbon type fuels. The second barrier layer 48 is made from a hydrocarbon barrier material such as fluorocarbon copolymer, which is a conventional material known in the art. The second barrier layer 48 has a predetermined thickness of approximately 0.11 mm. The second barrier layer 48 is disposed between the fuel containment layer 42 and the first layer 30. The fuel containment layer 42 is attached to the second barrier layer 48 with the attachment layer 44. The fuel containment fuel tank 10 includes a second attachment layer 50 to attach the second barrier layer 48 to an inner surface of the first layer 30. The second attachment layer 50 is made from an adhesive such as a shear sensitive adhesive material, which is commercially available and known in the art. The second attachment layer 50 has a predetermined thickness of approximately 0.07 mm. The operation of the fuel containment fuel tank 10 is similar to that illustrated in Figures 1 through 3. It should be appreciated that the second barrier layer 48 provides less permeation for a wide range of fuel including those mixed with alcohol.

Referring to Figure 5, yet another embodiment, according to the present invention, of the fuel containment fuel tank 10 is shown. In this embodiment, the fuel containment fuel tank 10 is similar to that described in connection with Figure 4, except that the fuel containment layer 42 has a heat weldable inner surface for attachment of internal components (not shown) in the fuel tank 10 while providing improved permeation resistance to alcohol or mixed alcohol-hydrocarbon type fuels. The second barrier layer 48 is made from a barrier material highly effective at preventing permeation of alcohol or hydrocarbon type fuels and blends such as a fluorocarbon copolymer, which is a conventional material known in the art. The inner surface of the fuel containment layer 42 is made from a tough heat weldable polymer material such as polyethylene or polyolefin, which is a conventional material known in the art. The fuel containment layer 42 is attached to the second barrier layer 48 with the first attachment layer 44 and the second barrier layer 48 is attached to an inner surface of the first layer 30 with the second attachment layer 50. Surface adhesion of the second barrier layer 48 is controlled so that one surface will separate in a high-speed impact while the other remains bonded to allow isolation of the fuel containment layer 42 with or without the attached second barrier layer 48 so that fuel leakage is prevented in an impact. The operation of the fuel containment fuel tank 10 is similar to that illustrated in Figure 4.

Referring to Figure 6, still another embodiment, according to the present invention, of the fuel containment fuel tank 10 is shown. In this embodiment, the fuel containment fuel tank 10 is similar to that described in connection with Figures 1 and 5, except that the first layer 30 is eliminated and the fuel containment layer 42 has a heat weldable inner surface for attachment of internal components (not shown) in the fuel tank 10 while providing improved permeation resistance to alcohol or mixed alcohol-hydrocarbon type fuels. The second barrier layer 48 is made from a barrier material highly effective at preventing permeation of alcohol or hydrocarbon type fuels and blends such as a fluorocarbon copolymer, which is a conventional material known in the art. The inner surface of the fuel containment layer 42 is made from a tough heat weldable polymer material such as polyethylene or polyolefin, which is a conventional material known in the art. The fuel containment layer 42 is attached to the second barrier layer 48 with the first attachment layer 44 and the second barrier layer 46 is attached to an inner surface of the second layer 32. Surface adhesion of the second barrier layer 48 is controlled so that the fuel containment layer 42 will separate in a high-speed impact while the second barrier layer 48 remains bonded to allow isolation of the fuel containment layer 42 so that fuel leakage is prevented in an impact. The operation of the fuel containment fuel tank 10 is similar to that illustrated in Figures 1 through 3. It should be appreciated that the first layer 30 is eliminated and that the second barrier layer 48 provides less permeation for a wide range of fuel including those mixed with alcohol.

The present invention has been described in an illustrative manner. It is to be understood that the terminology, which has been used, is intended to be in the nature of words of description rather than of limitation.

Many modifications and variations of the present invention are possible in light of the above teachings. Therefore, within the scope of the appended claims, the present invention may be practiced other than as specifically described.

## Claims

1. A fuel containment fuel tank (10) for a vehicle comprising:
a tank shell (12) having a wall (18,20,22,24,26,28) formed from a plurality of layers (30,32,34,36,38,40);
said layers (30,32,34,36,38,40) comprising at least an inner layer (30), an outer layer (40), a fuel permeation barrier layer (34) disposed between said inner layer (30) and said outer layer (40), and a fuel containment layer (42) disposed adjacent said inner layer (30) to break-away from said inner layer (30) and contain fuel during an impact.

2. A fuel containment fuel tank (10) as set forth in claim 1 wherein said fuel containment layer (42) is made from an elastic material.

3. A fuel containment fuel tank (10) as set forth in claim 2 wherein said elastic material is polyurethane.

4. A fuel containment fuel tank (10) as set forth in claim 1 wherein said fuel containment layer (42) has an inner surface made from a heat weldable material.

5. A fuel containment fuel tank (10) as set forth in claim 4 wherein said heat weldable material is a polyolefin.

6. A fuel containment fuel tank (10) as set forth in claim 1 wherein said fuel permeation barrier layer (34) is a hydrocarbon barrier material.

7. A fuel containment fuel tank (10) as set forth in claim 1 including a first adhesive layer (44) disposed between said fuel containment layer (42) and said inner layer (30).

8. A fuel containment fuel tank (10) as set forth in claim 7 wherein said first adhesive layer (44) is a shear sensitive adhesive.

9. A fuel containment fuel tank (10) as set forth in claim 6 including a second fuel permeation barrier layer (34) disposed between said fuel containment layer (42) and said inner layer (30).

10. A fuel containment fuel tank (10) as set forth in claim 9 including a second adhesive layer (50) disposed between said second fuel permeation barrier layer (34) and said inner layer (30).

11. A fuel containment fuel tank (10) as set forth in claim 1 wherein said inner layer (30) and said outer layer (40) are made of a polyethylene material.

12. A fuel containment fuel tank (10) for a vehicle comprising:
a tank shell (12) having a wall (18,20,22,24,26,28) formed from a plurality of layers (30,32,34,36,38,40);
said layers (30,32,34,36,38,40) comprising at least an inner layer (30), an outer layer (40), and a first fuel permeation barrier layer (34) disposed between said inner layer (30) and said outer layer (40); and
a fuel containment liner (42) disposed adjacent said inner layer (30) opposite from said outer layer (40) and being made of either one of an elastic material and heat weldable material to break-away from said inner layer (30) and contain fuel during an impact.

13. A fuel containment fuel tank (10) as set forth in claim 12 including a first adhesive layer (44) disposed between said fuel containment layer (42) and said inner layer (30).

14. A fuel containment fuel tank (10) assembly as set forth in claim 13 wherein said first adhesive layer (44) is a shear sensitive adhesive.

15. A fuel containment fuel tank (10) as set forth in claim 13 including a second fuel permeation barrier layer (34) disposed between said fuel containment layer (42) and said inner layer (30).

16. A fuel containment fuel tank (10) as set forth in claim 15 including a second adhesive layer (50) disposed between said second fuel permeation barrier layer (34) and said inner layer (30).

17. A fuel containment fuel tank (10) as set forth in claim 16 wherein said second adhesive layer (50) is a shear sensitive adhesive.

18. A fuel containment fuel tank (10) as set forth in claim 12 wherein said first fuel permeation barrier layer (34) is a hydrocarbon barrier material.

19. A fuel containment fuel tank (10) as set forth in claim 15 wherein said second fuel permeation barrier layer (34) is an alcohol barrier material.

20. A fuel containment fuel tank (10) for a vehicle comprising:
a tank shell (12) having a wall (18,20,22,24,26,28) formed from a plurality of layers (30,32,34,36,38,40);
said layers (30,32,34,36,38,40) comprising at least an inner layer (30) and an outer layer (40) comprising a polyethylene material and a fuel permeation barrier layer (34) comprising a hydrocarbon barrier material disposed between said inner layer (30) and said outer layer (40); and
a fuel containment layer (42) disposed adjacent said inner layer (30) opposite from said outer layer (40) and being made of either one of an elastic material and heat weldable material to break-away from said inner layer (30) and contain fuel during an impact.
